# EUROPEAN PATENT APPLICATION

(11) **EP 0 589 118 A1**
(43) Date of publication of application: **30.03.1994**
(21) Application number: 92480133.5
(22) Date of filing: 25.09.1992
(51) Int. Cl.: B07C 3/00

(54) **System and method for improving processing of OCR scanned parcels**

(71) Applicant: International Business Machines Corporation, Armonk, N.Y. 10504 (US)
(72) Inventor: Rosenbaum, Walter, F-75116 Paris (FR)
(74) Representative: Lattard, Nicole

(57) **Abstract**

A system and method for improving processing of OCR scanned parcels having a label with a destination address block, and accompanied by OCR scanned shipping instructions comprising at least said destination address block: the method comprises a main line of automated process and off-lines of recovery for said parcels not being recognized in the main line.
Recovery includes applying in off-lines an automatic fuzzy key match between scanned images of the label and the shipping instruction, and if retry succeeds, rending the parcel to the main line of process, and if retry does not succeed, prompting a manual recovery of the parcel to an operator, then rending the parcel to the main line of process.

## Description

This invention relates to the area of automated parcel processing and more particularly to an improved mode of using Optical Character Recognition (OCR) processing to recognize information in a parcels label and thereby facilitate automatic parcel sortation and track and trace parcel applications.

Worldwide nowadays, several hundred million parcels are delivered by National Postal Services and private express parcel companies. The volume of such parcels is the fastest growing segment of postal activity growing at a compound double digit rate per year in many countries.

To handle such massive and growing volume of parcels, several methods utilizing automated means have been experimented with and installed on a limited operational basis. Today almost all operational parcel sortation is done manually. Some attempts to introduce automation have mainly focused on introducing operator work stations adjacent to a conveyor belt after parcels have been manually faced - label up - and placed so as to pass directly in front of the operator seated a their adjacent workstation. The operator has to observe the label and enter at least the ZIP information corresponding to the parcel and from that point the parcel can be shunted onto a sorting conveyor such as those commercially available from companies like Korsan Krisplant, Teleflex, Daverio, CML and etc.

This mode of operator assisted sorting has several well recognized human factors, accuracy and productivity problems. Productivity is limited to several hundred parcel per hour per operator. The operator frequently cranes to see an address label and often, under the pressure of the 'production line' enters erroneous sort data. In general such operator driven operations are limited in the amount of data that can be entered. Hence, Track & Trace information such as full street, customer and addressee fields which are required for inbound sorting at a destination depot or distribution hub cannot be acquired in one encoding. The Track and Traces limitation also effects the key requirement of parcel tracking to be able to actively monitor and confirm a parcel's progress through the delivery network.

Alternative to operator assisted sorting are experiments involving bar-coding some or all of the information on the label. If this can be done at the customer site, then it offers a viable way to automate the sortation process. However in practice this requires special software and printing capability that few customers have and can maintain to the proper quality standard. To bar code labels at an arrival depot creates a bottle neck and recreates the operator intensive environment described above. In the public domain were parcels are brought to post offices for mailing no apriori bar-coding is possible and having the postal clerk do so would result in inordinate delays in patron.

It represents a significant advance in the state of the art and a major economic impact in the parcel delivery industry, bridging to parcel sortation the OCR technology. OCR has evolved in the last two decades as a method that enables automatic sortation of a large percentage of enveloped mail. One such scheme of OCR automated mail processing utilized today revolves around the method disclosed in US Patent 5,031,223 issued on July 9th, 1991 and assigned to International Business Machines Corporation having headquarters in the State of New-York, USA, the teaching of which will be incorporated hereafter by reference.

In an idealized situation parcel sortation can be conceptualized into phases:
Phase 1, image scan and acquisition: it is mainly a hardware pursuit wherein the top of a parcel is scanned to 'lift' a replica of what is printed into an electronic facsimile that can be acted upon by computerized logic.
Phase 2, analysis of image data: the areas of interest are looked for amongst all other information on the electronic facsimile of the top of the parcel.
Phase 3, interpretation of image data: it is being sought to delineate and interpret information fields in the address block corresponding to destination inclusive of city, street and recipient.
Phase 4, mail sortation: the information obtained in phase 3 results in the parcels being mechanically separated to the desired level to facilitate delivery.

In phase 2 and 3, the mail processing system must do sophisticated 'pattern recognition and matching' to find the location of address information even when confronted with 'interference' that is common on the top of parcels. Once an address location has been determined and the character information fields discerned and optically recognized, the constituent address fields must be found despite non standard format or extraneous information.This requires that highly accurate OCR be performed from the very onset.

Using attributes of labels, several promising methods exist that can locate labels using gray level and contrast enhancement. However, even if the label is located and the image deskewed, the ability to get consistent, clear, high resolution imagery from parcels that are several feet from an optical lens is beyond state of the art. This further degenerates the quality of OCR which unfortunately, even in close proximity postal mail reading OCRs, is prone to misread characters and on occasion has difficulty in discerning lines in the address block. Due to the low reliability of OCR in the parcel scanning scenario, systems predicated on the sole use of OCR for sorting parcels have not entered operational usage.

It is therefore an object of the invention to provide a system and method for improving the reliability of OCR driven parcel sortation to where it becomes commercially viable.

It is another object of the invention to provide a system and method for acquiring all information fields in an address label to facilitate tracking.

It is an additional object of this invention to allow scanning from a distance despite its degraded image quality to be used to achieve automatic sortation of parcels.

These and other objects, features and advantages of the invention are accomplished by the system and method for improving processing of parcel label imagery, disclosed herein: the physical parcel handling operation and the supporting paperwork channel are vested with interlocking 'image backbones'. The respective parcel and paperwork image objects allow automation of the parcel sortation operation. This system or method called Proactive Image Acquisition (PIA) achieves major cost and efficiency breakthroughs in parcel automatic sortation. At this point, general term 'paper work' in the specification is typified by 'Shipping Instruction' (SI) type of documentation for purpose of defining PIA in an express parcel setting. For postal parcel PIA applications the PIA sequel to SI documentation is also introduced.
Particularly, the invention includes a method for improving processing of OCR scanned parcels having a label with a destination address block, and accompanied by OCR scanned shipping instructions comprising at least said destination address block, said method comprising a main line of automated process and off-lines of recovery for said parcels not being recognized in the main line, and also comprising applying in off-lines an automatic fuzzy key match between scanned images of said label and said shipping instruction, and if retry succeeds, rending the parcel to the main line of process, and if retry does not succeed, prompting a manual recovery of the parcel to an operator, then rending the parcel to the main line of process.
More particularly, the invention includes a method for improving processing of OCR scanned parcels having a label comprising a destination address block made up of a first routing portion designating at least a destination postal location and a second routing portion designating at least an addressee, and an accompanying shipping instruction comprising at least said destination address block, said method comprising the steps of capturing at a sending location a first image of said destination address block on said label, and a second image of said destination address block on said shipping instruction, marking said parcel and said shipping instruction with an identity tag, analyzing said first image to generate a first signal representing said destination location, sorting said parcel at said sending location in response to said first signal for transport to said destination location, transporting said parcel to said destination location, further analyzing said first image to generate a second signal representing said addressee, transmitting said second signal to said destination location, receiving said parcel at said destination postal location, identifying said parcel and said shipping instruction by reading said identity tags, and sorting said parcel in response to said second signal for delivery to said addressee, wherein said step of analyzing said first image to generate a second signal includes the step of automatically fuzzy key matching said first and second images.

These and other objects, features and advantages of the invention will be more fully appreciated with reference to the accompanying figures:
FIG.1 is a system diagram of the invention as applied to express parcels.
FIG. 2 show the fuzzy match process that is at the heart of PIA Optical Character Label Identification (OCLI).
FIG.3 is a system diagram of the invention as it is applied to normal post office over the counter parcel posting.
FIG.4 is the sequence of logistical steps when PIA and OCLI are done during the travel time processing window.
FIG.5 is the PIA system flow.

The following description includes teaching from co-pending application 'System and method for improving processing of OCR scanned mail' assigned to the IBM Corporation, and having the application number filing date (FR 9 92 015).

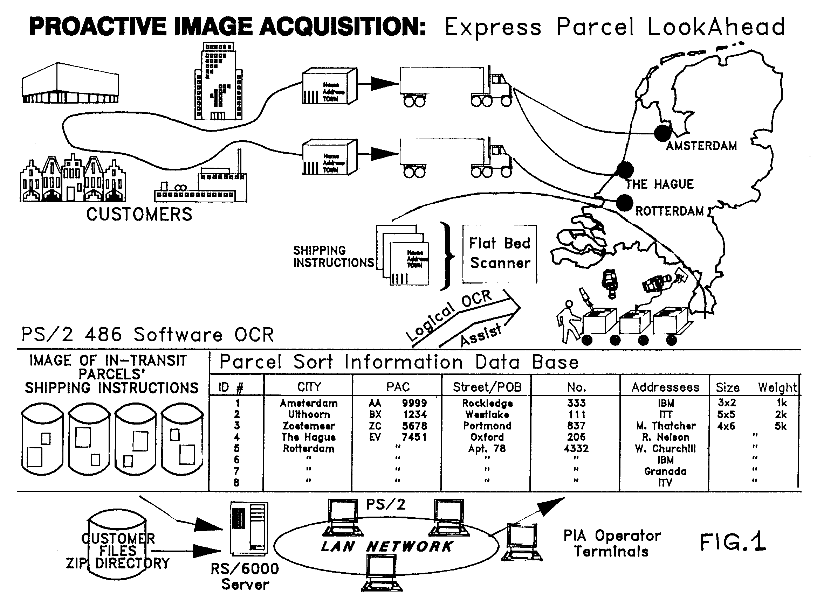

The paperwork chain related to every parcel reflects the documentation initiated normally by the customer, at the request of the shipper, that confirms the parcel's destination and allows for billing, tracking, etc.. The core of the paper work is the SI (Shipping Instruction) which contains all the sender/recipient and billing particulars like weight, dimensions, etc.. SIs are sent by well-known EDI, diskette or mainly as paper accompanying the parcel. PIA (Proactive Image Acquisition) is applied to parcel routing and paperwork entry as follows:
Generically speaking in label processing it is attempted to transform any character or bar coded imagery into machine readable data. The actual precedence of operations differ based on the operational environment and customer constraints; however, assuming in this stage of PIA the sortation and tracking data are acquired, this means it is resolved from the label:
Destination depot (ZIP or Partial ZIP)
Delivery street address and recipient name
Sender name ( for tracking purposes)
The overall PIA process is shown schematically in FIG.1.

PIA is based on acquiring an image scan of parcels and SIs at the earliest possible opportunity. For parcels this tends to be immediately after facing and for SI paper media upon arrival of a pickup at the depot. Once the image has been acquired, it is the ability of PIA to achieve a very high rate of automatic recognition and to greatly facilitate rekeying productivity that are at the heart of the PIA system efficiency.

The resolution required for any intelligent processing of image is about 200 dots per inch (dpi) with four (4) bits of gray level. Since a parcel surface can be up to about 60cm by 60cm, the acquisition of a high resolution image scan represents a significant challenge from both the optical and data processing stand points. Hence, it can be assumed that the label image quality that will enter PIA will not be of sufficient sharpness to allow standard OCR processing.

To achieve a reasonable rate of automatic parcel sorting, PIA augments traditional OCR methods with apriori data to achieve what is called OCLI (Optical Character Label Identification). This is the heart of PIA which is in use integrally tied to DOCR (Deferred processing of OCR scanned mail) and knowledge based operator assisted disambiguation and validation process which is extensively explained in already mentioned US Patent 5,031,223.

For explanation purpose, general steps of the DOCR process are listed as follows:
1. Parcels are input and scanned by a state of the art OCR equipment which resolves the city/state/zip line of the address. This is sufficient to route the parcel to a district delivery post office. Each mail piece is then 'bar coded' with an identification number and dispatched to its delivery post office.
2. The image scan of the address block (which contains the remaining 3-4 lines of address information) is captured, compressed and stored on a disk in association with the identification number.
3. While the physical parcels are in route to their delivery post offices, (i.e., via truck, train, or plane, or on a dolly within the same post office) their respective address block images are processed off-line in specially configured workstations located either at the sending location or at a remote location.
   In a workstation, each address block image is processed to resolve sortation down to delivery sequence as follows:
   a. Off-line OCR is performed on the remaining 3-4 address lines of the address block in either a workstation or in a LAN server processor.
   b. The address data is reviewed against a Post Knowledge Base. If there are no apparent OCR misreads, then the system will:
      - validate and cross check all the address fields including the recipient,
      - resolve any address ambiguities such as incomplete address, and
      - derive the delivery sequence within a building.
   c. If OCR misreads are encountered, then the system will:
      - perform OCR misread correction using algorithms for spelling correction. The correction candidate information is displayed to the workstation operator along with the original image. The operator makes the final correction decision. This provides advantages over the operator rekeying the address correction, including economy of key-strokes and avoidance of operator errors,
      - make knowledge based disambiguation of incomplete address data.
4. At the completion of Step 3, all the address data required to machine sort the parcel down to delivery sequence will have been resolved. The information is then batched by destination post office and transmitted via a high speed telecommunications network to the respective destination post offices.
5. The address information is re-associated with each physical parcel when it arrives at the destination post office via the identification number previously bar coded. The physical mail piece and its sortation information hence 'come together': the sorting is completed down to delivery sequence.

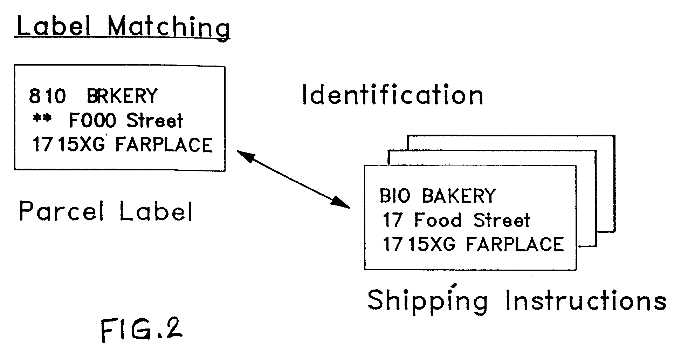

Now, PIA is easiest explained initially in an express parcel setting:
In express parcels applications, each item is accompanied by a SI which contains sender, recipient and billing information. For OCLI purpose the SIs are flat bed scanned into the system, as soon as possible upon their arrival at the origin depot. SIs are transformed into machine readable information via OCR and knowledge based operator assisted disambiguation and validation process. They then become the database that drives the OCLI process.
The database of SIs is from there used as a directory of valid label identities. To recover the identity of respective parcel labels that were scanned and imperfectly OCRed, the garbled OCR of the label is used as a fuzzy match key into the SI Directory. This process is shown with respect to FIG.2. Matching to a SI in turn amounts to a label recognition/identification rather than resolution of a label's content based on direct 'optical character' mapping of imagery into machine readable symbols (alphas and numerics). Thereby via fuzzy key match to a specific SI are acquired the specified label constituent data (sender, recipient and address) required for sorting and tracking purpose.

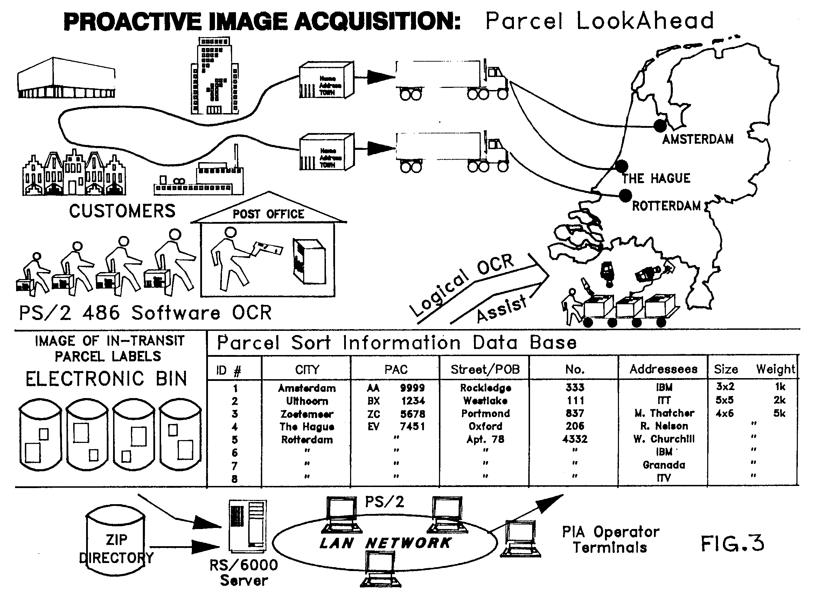

DOCR predictive rekeying of non OCRable label is similarly coupled to the SI database and thereby the predictive keying aspects of knowledge based operator assisted disambiguation and validation process are further magnified.
The augmented PIA process for post office mailed parcels is shown in FIG.3. For normal postal parcels that are sent from post-offices, PIA bridges to the post-office counter-top to get its apriori information ('LookAhead') that is later used to drive OCLI. The apriori information is obtained by simply scanning the label (i.e. via hand scanner or a overhead scanner attached to the weighing scale) when the parcel is accepted for posting (based on logistic considerations, at the time of scanning a label with DOCR bar code can be put on the parcel to facilitate identification when the parcels are later scanned for automatic sorting). In the interim, the label images that were lifted at the postal counter are processed like SIs were in the Express Parcel scenario to provide a directory of all the labels that will be scanned during the realtime parcel sorting process later that day. The parcels during sorting are identified via the OCLI fuzzy match or the optional DOCR identification bar code.

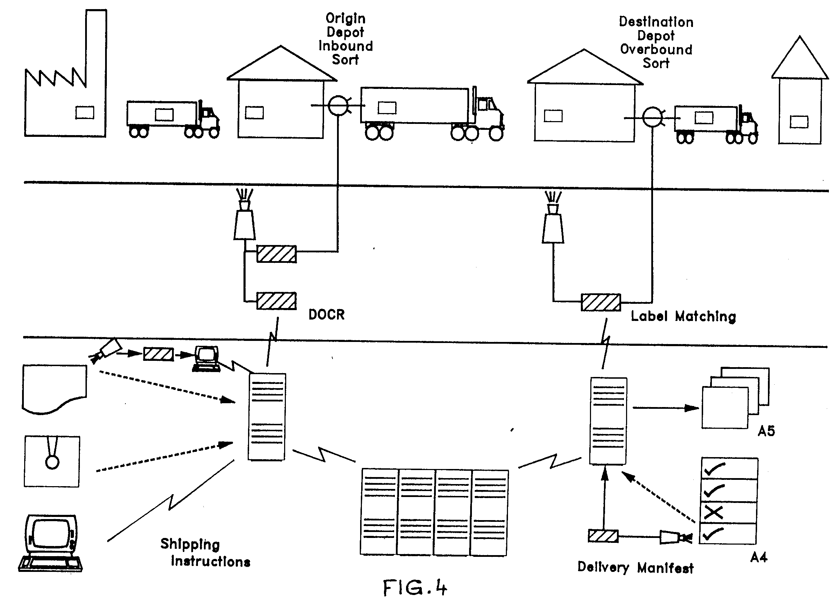

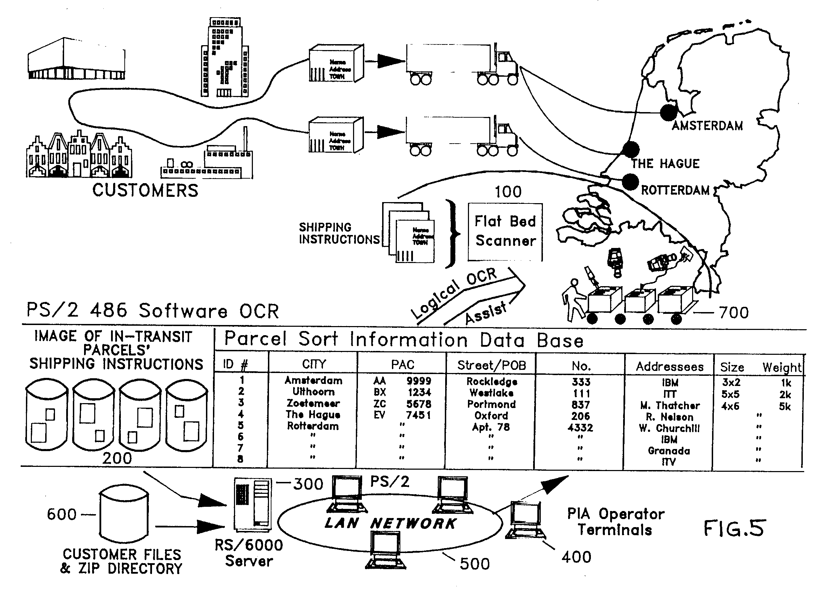

The maximum leverage, efficiency and cost displacement of PIA is achieved if initially only the outgoing 2-3 digits of the ZIP are captured and validated via the city name in the origin depot. All the remaining ZIP, street, recipient name and sender name/address are resolved as a DOCR process using the 'travel time' (see already mentioned US Patent 5,031,223) to complete the SI OCR/knowledge based operator assisted disambiguation and validation process while the parcels are in transit and be prepared to drive OCLI of the entire label at the destination depot. The initial destination sort decision ( 2 - 3 digits of the ZIP) would be made using also knowledge based operator assisted disambiguation and validation process. Tests have shown that the process could support 2400 parcels/operator/hour entering 'inbound sort' decisions. FIG.4
FIG.5 is the PIA system flow.
A directory of apriori information is compiled by acquiring image via a scanning device 100. Scanning device 100 may be a flatbed scanner, fax or even an EDI source. The objective is to compile a compendium of the totality of address information that will later be encountered as parcel labels. In the present circumstance of express Parcel, the information is derived from Shipping Instructions.
In the scenario for over the counter postal parcels, labels are initially scanned by the counter clerk one at a time using a hand or mounted device that yields high quality imagery. These images are OCRed and/or submitted to knowledge based operator assisted disambiguation and validation process to serve the function that the SIs do in the express Parcel scenario.

In all current circumstances except EDI, the information acquired by source 100 is in image form that is then passed to electronic store 200 where it is acted upon by processor 300. Processor 300 evokes software OCR to reduce the character imagery to machine readable form. Those fields that fail OCR processing are passed to operator stations 400 on LAN 500 where the knowledge based operator assisted disambiguation and validation process is performed. The operator rekeying correction and the validation of OCR output are done via access to the customer directory and ZIP Code directory resident on storage device 600. The resulting machine readable abstract of the SIs is stored for OCLI collateral data purpose on storage device 200 with content of the form shown in tabular format analogy appended to storage device 200.

Parcel label data enters the system from a scanning device 700. Image of the label is sent to processor 300 wherein it is acted upon by Software OCR. It is anticipated that recognition quality for the reasons stated previously in the present application will not provide high recognition rates. Hence when scanning device 700 lifts an image, the quality of OCR performed in processor 300 will be diminished below what is required for automatic sortation. The recovery is achieved by invoking in processor 300 a fuzzy match via the Shipping Instruction (or post office counter scanned label) data that has been apriori reduced to machine readable form and stored in memory device 200.

## Claims

1. A method for improving processing of OCR scanned parcels having a label comprising a destination address block made up of a first routing portion designating at least a destination postal location and a second routing portion designating at least an addressee, and
an accompanying shipping instruction comprising at least said destination address block,
said method comprising the steps of:
capturing at a sending location a first image of said destination address block on said label, and a second image of said destination address block on said shipping instruction,
marking said parcel and said shipping instruction with an identity tag,
analyzing said first image to generate a first signal representing said destination location,
sorting said parcel at said sending location in response to said first signal for transport to said destination location,
transporting said parcel to said destination location,
further analyzing said first image to generate a second signal representing said addressee,
transmitting said second signal to said destination location,
receiving said parcel at said destination postal location, identifying said parcel and said shipping instruction by reading said identity tags, and sorting said parcel in response to said second signal for delivery to said addressee,
said method being characterized in that said step of analyzing said first image to generate a second signal includes the step of:
automatically fuzzy key matching said first and second images.

2. The method of claim 1, further characterized in that said step of analyzing said first image to generate a first signal also includes the step of automatically fuzzy key matching said first and second images.

3. A method for improving processing of OCR scanned parcels having a label with a destination address block, and accompanied by OCR scanned shipping instructions comprising at least said destination address block, said method comprising a main line of automated process and off-lines of recovery for said parcels not being recognized in the main line, said method being characterized in that it also comprises:
applying in off-lines an automatic fuzzy key match between scanned images of said label and said shipping instruction, and if retry succeeds, rending the parcel to the main line of process, and if retry does not succeed, prompting a manual recovery of the parcel to an operator, then rending the parcel to the main line of process.

4. A system for improving processing of OCR scanned parcels having a label comprising a destination address block made up of a first routing portion designating at least a destination postal location and a second routing portion designating at least an addressee, and
an accompanying shipping instruction comprising at least said destination address block,
said system comprising:
means for capturing at a sending location a first image of said destination address block on said label, and a second image of said destination address block on said shipping instruction,
means for marking said parcel and said shipping instruction with an identity tag,
means for analyzing said first image to generate a first signal representing said destination location,
means for sorting said parcel at said sending location in response to said first signal for transport to said destination location,
means for transporting said parcel to said destination location,
means for further analyzing said first image to generate a second signal representing said addressee,
means for transmitting said second signal to said destination location,
means for receiving said parcel at said destination postal location, identifying said parcel and said shipping instruction by reading said identity tags, and sorting said parcel in response to said second signal for delivery to said addressee,
said system being characterized in that it also includes for analyzing said first image to generate a second signal, means for automatically fuzzy key matching said first and second images.

5. The system of claim 4, further characterized in that it also includes for analyzing said first image to generate a first signal, means for automatically fuzzy key matching said first and second images.
